# EUROPÄISCHE PATENTSCHRIFT

(11) **EP 2 280 867 B1**
(45) Veröffentlichungstag und Bekanntmachung des Hinweises auf die Patenterteilung: **11.06.2014**
(21) Anmeldenummer: 09734471.7
(22) Anmeldetag: 23.04.2009
(51) Int. Cl.: B64C 9/18, B64C 9/16, B64C 9/24

(54) **LATERAL-KOPPLUNGSVORRICHTUNG ZUM HALTEN UND FÜHREN ZUMINDEST EINES AERODYNAMISCHEN KÖRPERS GEGENÜBER DEM HAUPTFLÜGEL EINES FLUGZEUGS, TRAGFLÜGEL UND FLUGZEUG MIT EINER SOLCHEN LATERAL-KOPPLUNGSVORRICHTUNG**
LATERAL COUPLING DEVICE FOR HOLDING AND GUIDING AT LEAST ONE AERODYNAMIC BODY IN RELATION TO THE MAIN WING OF AN AIRCRAFT, WING AND AIRCRAFT COMPRISING THE SAME
DISPOSITIF DE COUPLAGE LATÉRAL POUR MAINTENIR ET GUIDER AU MOINS UN CORPS AÉRODYNAMIQUE PAR RAPPORT À UNE AILE PRINCIPALE D'UN AÉRONEF, VOILURE ET AÉRONEF COMPRENANT LEDIT DISPOSITIF

(30) Priorität: 24.04.2008 US 47467; 24.04.2008 DE 102008020654
(43) Veröffentlichungstag der Anmeldung: 09.02.2011
(73) Patentinhaber: Airbus Operations GmbH, 21129 Hamburg (DE)
(72) Erfinder: ANDREANI, Luc, 28325 Bremen (DE)
(74) Vertreter: UEXKÜLL & STOLBERG
(86) Internationale Anmeldenummer: PCT/EP2009/002964
(87) Internationale Veröffentlichungsnummer: WO 2009/130025

(56) Entgegenhaltungen:
- EP-A- 1 637 453
- US-A- 4 405 105
- US-A- 4 614 320
- US-A- 4 715 567
- US-A- 5 201 479

## Beschreibung

Die Erfindung betrifft eine Lateral-Kopplungsvorrichtung zum Halten und Führen zumindest einen aerodynamischen Körpers gegenüber dem Hauptflügel eines Flugzeugs, einen Tragflügel und ein Flugzeug mit einer solchen Lateral-Kopplungsvorrichtung.

Die EP 1 637 453 beschreibt eine Vorrichtung zur Messung von Gleichlauffehlern von Hochauftriebsklappen. Sie stellt den nächstliegenden Stand der Technik dar und offenbart den Oberbegriff des Anspruchs 1.

Bei bekannten Hochauftriebssystemen von modernen Verkehrsflugzeugen und Transportflugzeugen, insbesondere bei solchen, die ein hohes Abfluggewicht aufweisen, sind z.B. an der Flügelhinterkante vorgesehene Strömungsklappen als Hochauftriebsklappen durch mehrere Antriebsstationen mit dem Tragflügel bewegbar verbunden. Zur Betätigung der Klappe wird eine Torsionswelle von einem z.B. zentral im Flugzeug angeordneten Klappenantrieb in Rotation versetzt und diese Rotation über Kopplungsglieder auf Stellvorrichtungen zur Verstellung der Strömungsklappe übertragen. Strömungsklappenaufhängungen leiten die Landeklappenlasten über Festlageraufhängungen, Loslageraufhängungen und Landeklappenantrieben in die Flugzeugstruktur ein. Die Laterallasten (X-Lasten) werden dabei an den Festlageraufhängungen üblicherweise über Biegung eingeleitet.

Durch die Einleitung der Laterallasten an den Festlageraufhängungen über Biegung, insbesondere bei größeren Abständen der Landeklappendrehachsen zur Flügelunterseite, sind breitere Festlageraufhängungen erforderlich, was zu hohen Gewichten und aerodynamisch ungünstigen Lösungen führt (breitere Verkleidungen). Bei Flugzeugen mit innerer und äußerer Landeklappe und unterschiedlich geneigten Landeklappendrehachsen mit Festlageraufhängungen kommt es außerdem zu Überschneidungen beim Fahren der beiden Landeklappen im Trennstellenbereich, was die Komplexität der Abdichtung zwischen den beiden Landeklappen erhöht. Die negativen Auswirkungen vergrößern sich noch bei einer höheren Reisegeschwindigkeit des Flugzeuges und bei einem stärker gepfeilten Flügel.

Aufgabe der Erfindung ist, einen Tragflügel bereitzustellen, bei dem insbesondere bei der Verwendung weicher Flügelstrukturen eine gewichtssparende Kopplung zwischen dem Hauptflügel und der Strömungsklappe möglich ist.

Diese Aufgabe wird mit den Merkmalen der unabhängigen Ansprüche gelöst. Vorteilhafte Ausführungsformen und Weiterbildungen des erfindungsgemäßen Hochauftriebssystems sind in den auf diese rückbezogenen Unteransprüchen angegeben.

Ein Vorteil der Erfindung liegt in der Möglichkeit einer Einsparung von Gewicht bei deh Aufhängungen und den entsprechenden Verkleidungen an den aerodynamischen Stellklappen, Steuerklappen oder generell Strömungskörpern, da keine direkte Einleitung von X-Lasten der Landeklappe in die parallel zur Flugrichtung schwenkbar angelenkten Aufhängungen und den flügel- oder rumpfseitig festen Aufhängeträgern notwendig ist. Weiterhin ist eine Einsparung von Gewicht beim Klappenantrieb durch kurze Lastwege bei Lagerung der Landeklappenantriebe an den flügel- oder rumpfseitigen Aufhängeträgern (z. B. bei Blockierfällen) möglich.

Weiterhin kann durch die Anwendung der Erfindung eine Reduzierung des aerodynamischen Widerstandes im Reiseflug durch schmalere Verkleidungen der Landeklappenaufhängungen erreicht werden aufgrund des Entfalls oder einer Reduzierung der Festlageraufhängung der aerodynamischen Körper und z.B. der Landeklappen.

Mit Anwendung der Erfindung auf Landeklappen kann auch eine Verringerung der Komplexität der Abdichtung bei Flugzeugen mit innerer und äußerer Landeklappe und unterschiedlich geneigten Landeklappendrehachsen, durch Steuerung der Bewegung der Landeklappen in Spannweitenrichtung erreicht werden. Die Einleitung der Y- und Z-Lasten der Landeklappe in die Flugzeugstruktur kann z.B. über die parallel zur Flugrichtung schwenkbar angelenkten Aufhängungen, den flügel- oder rumpfseitig festen Aufhängeträgern und den an den festen Aufhängeträgern senkrecht zur Flugrichtung gelagerten Landeklappenantrieben erfolgen. Auch können die X-Lasten der Landelappe als reine Längskräfte über die laterale Verbindungsstange in die Flügel- oder Rumpfstruktur eingeleitet werden.

Bei Anwendung der Erfindung auf Landklappen kann durch entsprechende Anordnung der Lagerpositionen der lateralen Verbindungsstange an den Landeklappen und der Flügel- oder Rumpfstruktur die Größe der Bewegung der Landeklappen in Spannweitenrichtung beim Fahren der Klappen bestimmt werden.

Nach der Erfindung ist eine Lateral-Kopplungsvorrichtung zum Halten und Führen zumindest eines aerodynamischen Körpers gegenüber dem Hauptflügel in dessen Spannweiten-Richtung bei dessen Verstellung vorgesehen, aufweisend: eine Kopplungs-Verbindung, einen ersten Kopplungs-Anschluss zur Kopplung eines ersten Endes der Kopplungs-Verbindung mit dem Hauptflügel oder einem anderen Flugzeug-Bauteil, z.B. einem Rumpf-Bauteil, oder einem weiteren aerodynamischen Körper und einen zweiten Kopplungs-Anschluss zur Kopplung eines zweiten Endes der Kopplungs-Verbindung mit dem aerodynamischen Körper, wobei die Lateral-Kopplungsvorrichtung insgesamt fünf Freiheitsgrade aufweist und eine Verstell-Bewegung des aerodynamischen Körpers gegenüber dem Hauptflügel quer zur Spannweitenrichtung desselben zulässt. Die je nach den beschriebenen Anwendungsfällen vorgesehene Kopplung von Hauptflügel und/oder einem mit diesem verbundenen Flugzeug-Bauteil und/oder einem weiteren aerodynamischen Körper erfolgt mittels der erfindungsgemäßen Lateral-Kopplungsvorrichtung gemäß einem der Ansprüche 1, 17 und 18.

Weiterhin ist nach der Erfindung ein Tragflügel eines Flugzeugs mit einem Hauptflügel und zumindest einem mittels einer Antriebs-Vorrichtung gegenüber diesem quer zu dessen Spannweiten-Richtung verstellbaren aerodynamischen Körper vorgesehen, aufweisend:
■ zumindest zwei voneinander in Spannweitenrichtung des Hauptflügels beabstandete Anschluss-Vorrichtungen zur Führung des aerodynamischen Körpers beim Verstellen gegenüber dem Hauptflügel, die den aerodynamischen Körper mittels einer Gelenk-Verbindung derart lagert, dass diese zumindest einen Rotations-Freiheitsgrad des aerodynamischen Körpers gegenüber dem Hauptflügel mit einer Drehachse zulässt, die eine Richtungskomponente quer zur Spannweiten-Richtung des aerodynamischen Körpers hat;
■ eine Lateral-Kopplungsvorrichtung zum Halten und Führen des zumindest einen aerodynamischen Körpers gegenüber dem Hauptflügel in dessen Spannweiten-Richtung bei dessen Verstellung, aufweisend: eine Kopplungs-Verbindung, einen ersten Kopplungs-Anschluss zur Kopplung eines ersten Endes der Kopplungs-Verbindung mit dem Hauptflügel oder einem mit diesem verbundenen Flugzeug-Bauteil oder einem weiteren aerodynamischen Körper und einen zweiten Kopplungs-Anschluss zur Kopplung eines zweiten Endes der Kopplungs-Verbindung mit dem aerodynamischen Körper, wobei die Lateral-Kopplungsvorrichtung insgesamt fünf Freiheitsgrade aufweist und eine Verstell-Bewegung des aerodynamischen Körpers gegenüber dem Hauptflügel quer zur Spannweitenrichtung desselben zulässt.

Dabei kann insbesondere vorgesehen sein, dass zumindest zwei Anschluss-Vorrichtungen zur Verstellung des aerodynamischen Körpers jeweils aufweisen: jeweils ein an dem Hauptflügel befestigtes Trägerteil, einen Aufhängeträger, eine erste Gelenk-Verbindung mit zumindest einem Rotations-Freiheitsgrad zur Kopplung des aerodynamischen Körpers mit dem Aufhängeträger und eine zweite Gelenk-Verbindung, mit der der Aufhängeträger mit dem Trägerteil unter Ausbildung zumindest eines Rotationsfreiheitsgrads gekoppelt ist, wobei der Rotations-Freiheitsgrad der zweiten Gelenk-Verbindung durch eine Drehachse eine Richtungskomponente in Spannweiten-Richtung des aerodynamischen Körpers hat.

Nach der Erfindung ist weiterhin ein Tragflügel eines Flugzeugs mit einem Hauptflügel und zumindest zwei mittels einer Antriebs-Vorrichtung gegenüber dem Hauptflügel quer zu dessen Spannweiten-Richtung verstellbaren aerodynamischen Körpern vorgesehen, die in der Spannweiten-Richtung des Hauptflügels gesehen nebeneinander angeordnet sind, aufweisend: zumindest zwei voneinander in Spannweitenrichtung des Hauptflügels beabstandete Anschluss-Vorrichtungen zur Führung der aerodynamischen Körper beim Verstellen gegenüber dem Hauptflügel, die den aerodynamischen Körper mittels einer Gelenk-Verbindung derart lagert, dass diese zumindest einen Rotations-Freiheitsgrad des aerodynamischen Körpers gegenüber dem Hauptflügel mit einer Drehachse zulässt, die eine Richtungskomponente quer zur Spannweiten-Richtung des aerodynamischen Körpers hat; sowie eine vorgenannte Lateral-Kopplungsvorrichtung nach der Erfindung zum Halten und Führen der zumindest zwei aerodynamischen Körper gegenüber dem Hauptflügel in dessen Spannweiten-Richtung bei dessen Verstellung. Die erfindungsgemäße Lateral-Kopplungsvorrichtung koppelt die beiden aerodynamischen Körper miteinander, wobei ein erster Kopplungs-Anschluss an dem einen der aerodynamischen Körper angeordnet ist und ein zweiter, über die Kopplungs-Verbindung mit dem ersten Kopplungs-Anschluss in Verbindung stehender Kopplungs-Anschluss an dem weiteren der aerodynamischen Körper angeordnet ist. Alternativ oder zusätzlich koppelt eine weitere Lateral-Kopplungsvorrichtung nach der Erfindung die zumindest zwei nebeneinander angeordnete aerodynamische Körper.

Nach der Erfindung ist weiterhin ein Flugzeug mit einem Rumpf, einem Tragflügel mit einem Hauptflügel und zumindest einem mittels einer Antriebs-Vorrichtung gegenüber diesem quer zu dessen Spannweiten-Richtung verstellbaren aerodynamischen Körper vorgesehen, aufweisend: zumindest zwei voneinander in Spannweitenrichtung des Hauptflügels beabstandete Anschluss-Vorrichtungen zur Führung des aerodynamischen Körpers beim Verstellen gegenüber dem Hauptflügel, die den aerodynamischen Körper mittels einer Gelenk-Verbindung derart lagert, dass diese zumindest einen Rotations-Freiheitsgrad des aerodynamischen Körpers gegenüber dem Hauptflügel mit einer Drehachse zulässt, die eine Richtungskomponente quer zur Spannweiten-Richtung des aerodynamischen Körpers hat; sowie eine vorgenannte Lateral-Kopplungsvorrichtung nach der Erfindung zum Halten und Führen des zumindest einen aerodynamischen Körpers in dessen Spannweiten-Richtung gegenüber einem Flugzeug-Bauteil des Rumpfes bei dessen Verstellung. Die Lateral-Kopplungsvorrichtung koppelt den aerodynamischen Körper an das Flugzeug-Bauteil, wobei ein erster Kopplungs-Anschluss an dem Flugzeug-Bauteil angeordnet ist und ein zweiter in der Spannweiten-Richtung des Hauptflügels gesehen neben dem ersten Kopplungs-Anschluss angeordneter zweiter Kopplungs-Anschluss, der über die Kopplungs-Verbindung mit dem ersten Kopplungs-Anschluss in Verbindung steht, an dem aerodynamischen Körper angeordnet ist.

In den vorgenannten Fällen kann der aerodynamische Körper insbesondere jeweils eine Hinterkanten-Klappe sein.

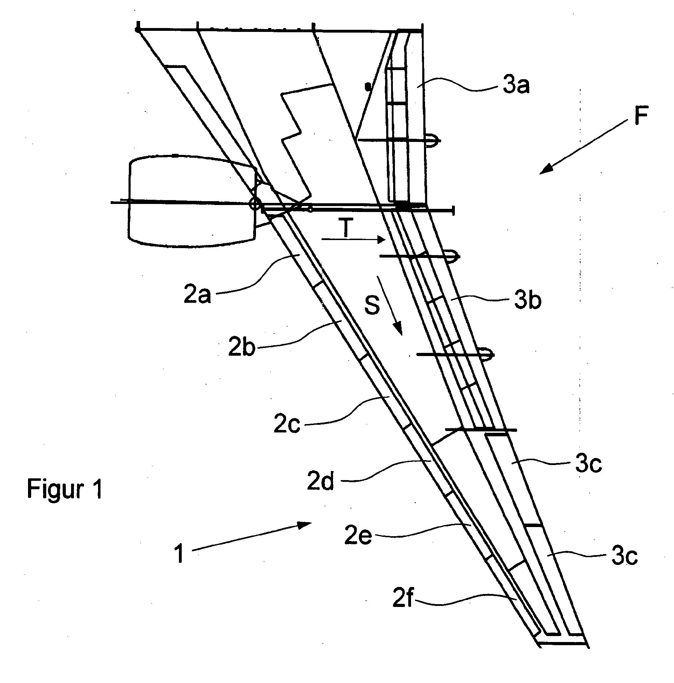

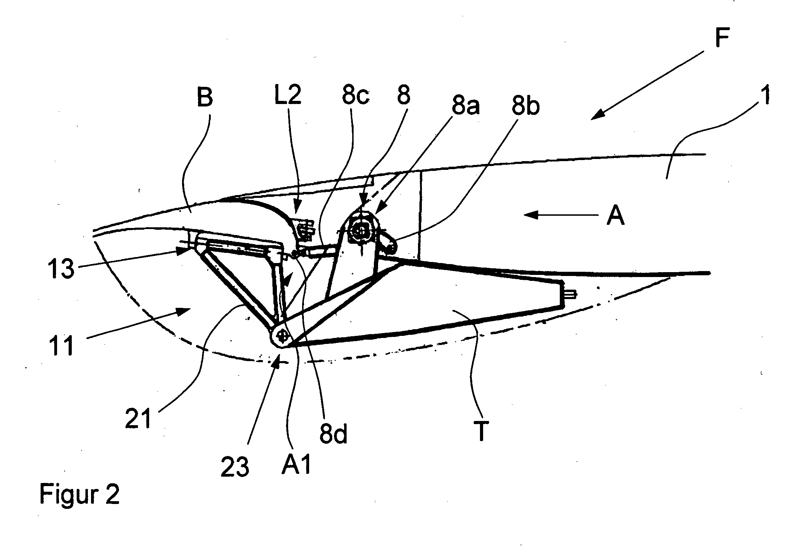

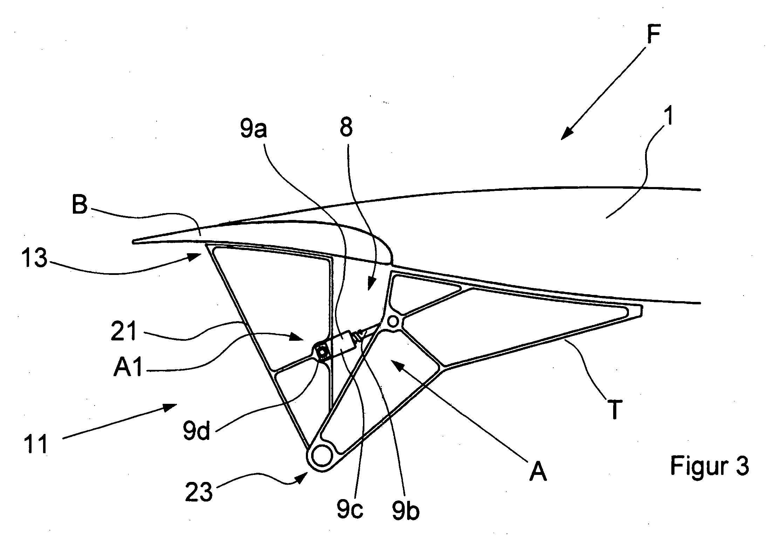

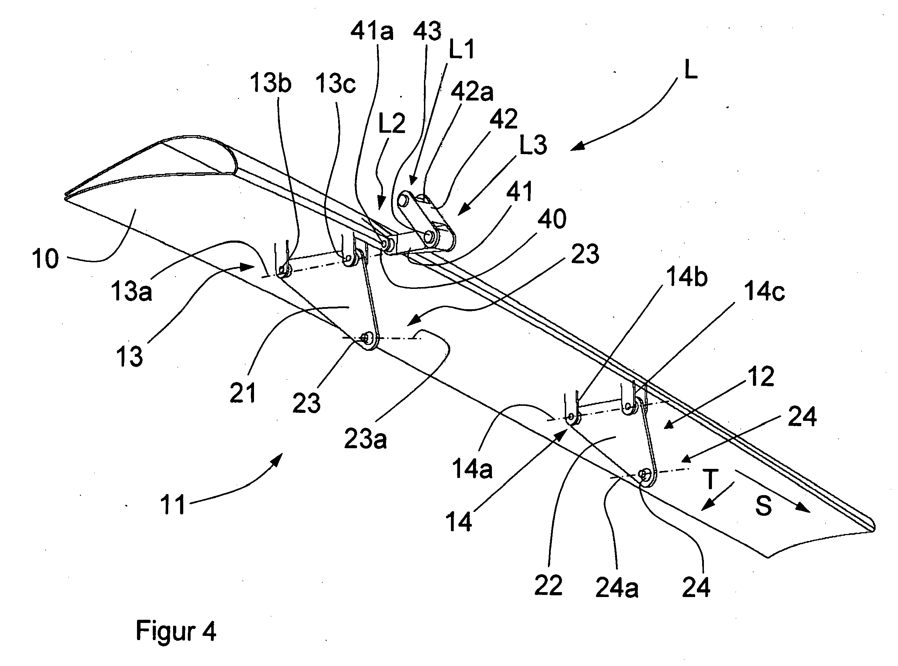

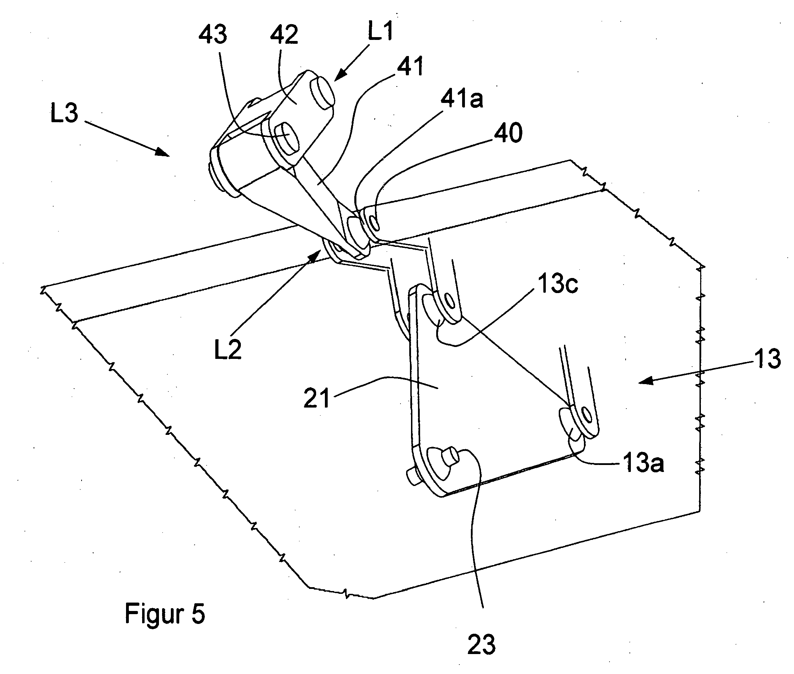

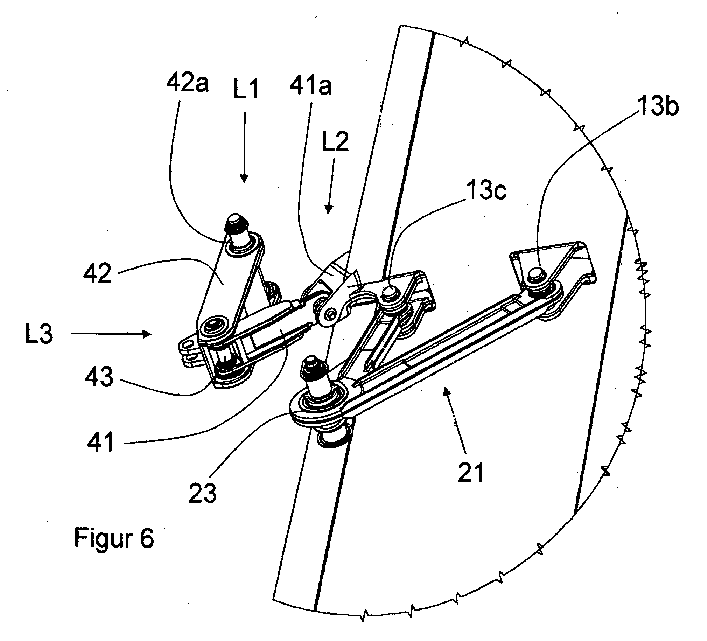

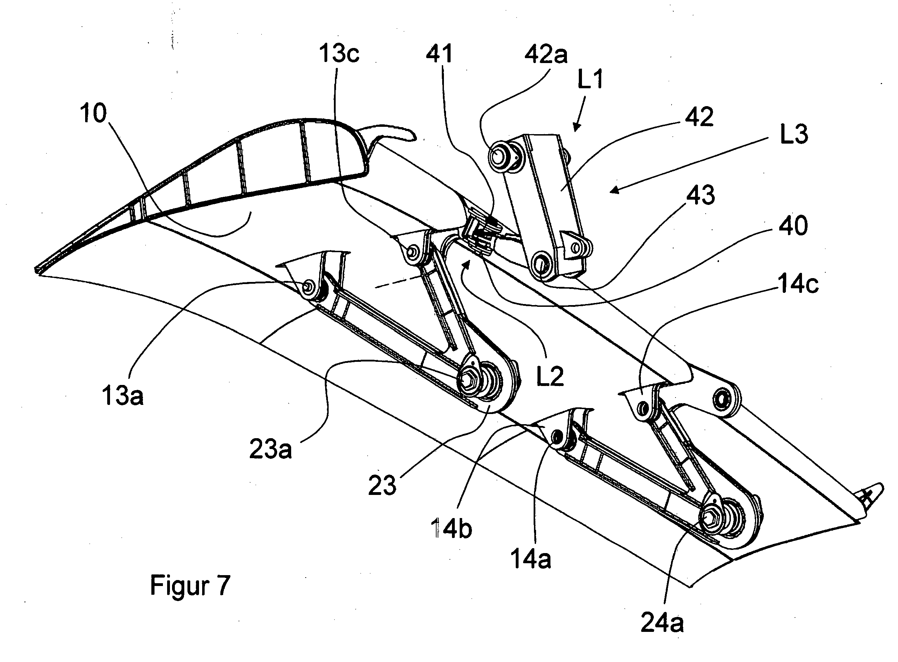

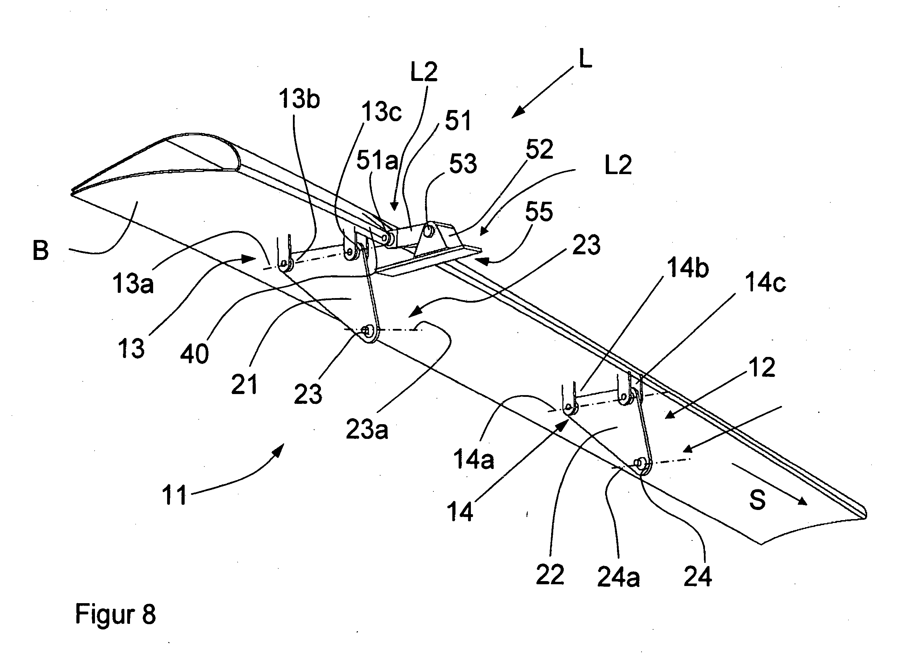

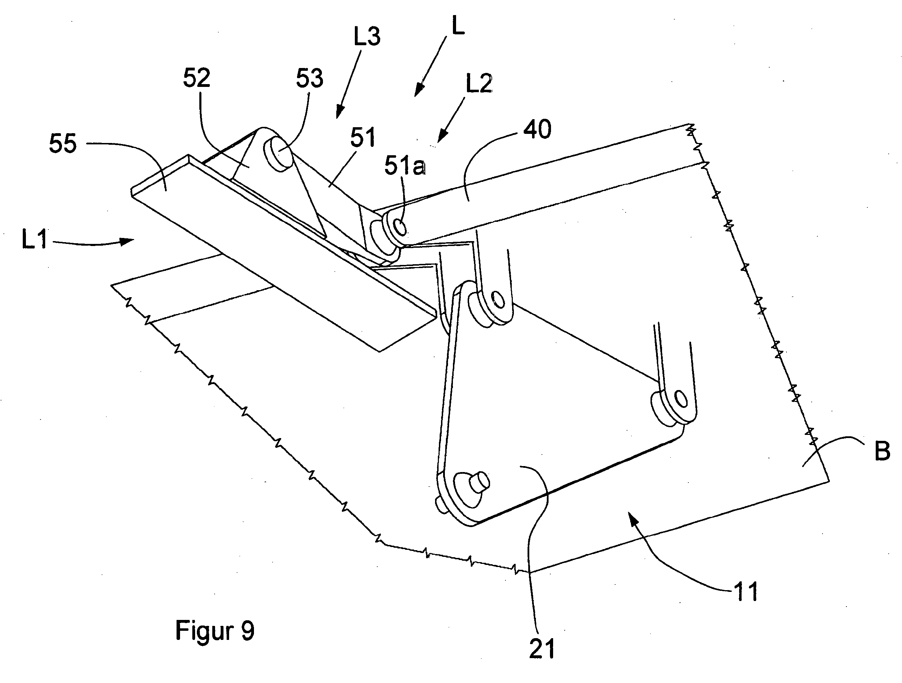

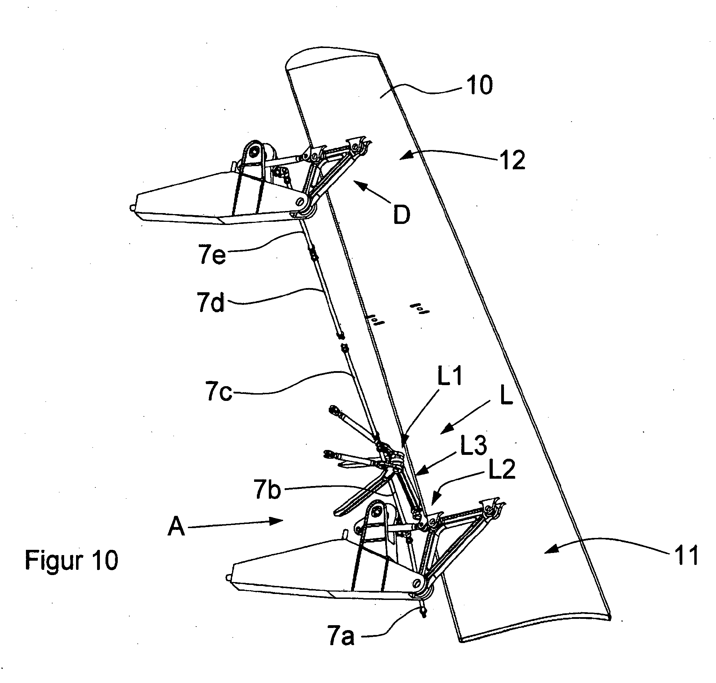

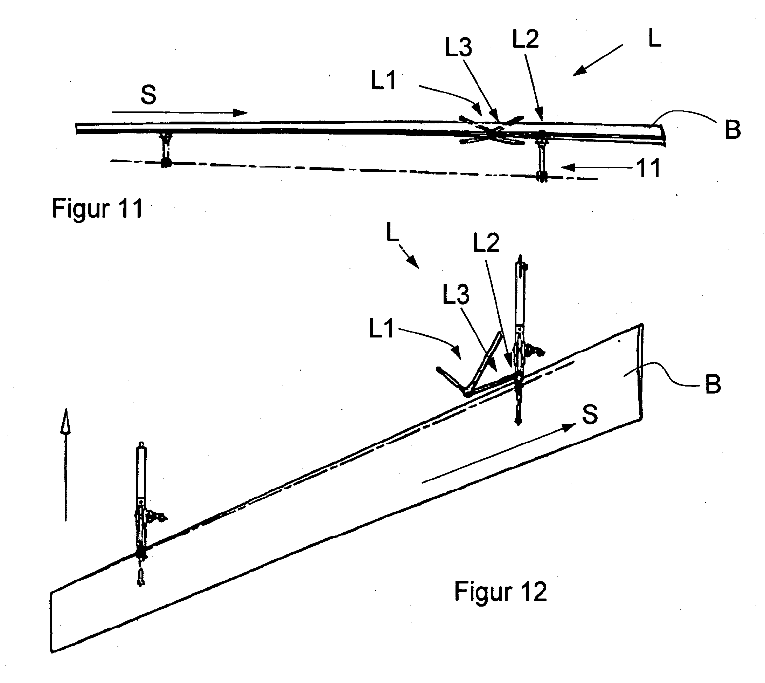

Im Folgenden werden Ausführungsbeispiele der Erfindung anhand beiliegender Figuren beschrieben, die zeigen:
■ Fig. 1 eine schematische Darstellung eines Flügels eines Flugzeugs mit einem Hauptflügel und mehreren aerodynamischen Körpern wie Vorderkantenflügeln und Hinterkantenklappen zur Bildung eines Hochauftriebssystems, für das Ausführungsformen der Erfindung angewendet werden können;
■ Figur 2 eine schematische Darstellung einer Hinterkanten-Klappe in einem Seitenschnitt mit einer Anschluss-Vorrichtung zur Führung des aerodynamischen Körpers beim Verstellen gegenüber dem Hauptflügel mit einem Trägerteil, einem Aufhängeträger, einer Gelenk-Verbindung zur Kopplung des Aufhängeträgers mit dem Trägerteil, wobei die Antriebs-Vorrichtung einen Dreh-Aktuator und einen von diesem angetriebenen Antriebshebel aufweist;
■ Figur 3 eine schematische Darstellung einer Hinterkanten-Klappe in einem Seitenschnitt mit einer Anschluss-Vorrichtung gemäß Figur 2, wobei die Antriebs-Vorrichtung einen Schub-Aktuator und einen von diesem angetriebenen Antriebshebel aufweist;
■ Figur 4 einen aerodynamischen Körper in Form einer Hinterkanten-Klappe als Teil einer Ausführungsform des erfindungsgemäßen Tragflügels schräg von unten gesehen mit einer Ausführungsform der erfindungsgemäß vorgesehenen Lateral-Kopplungsvorrichtung;
■ Figur 5 eine vergrößerte Darstellung eines Ausschnitts der Darstellung der Figur 4 mit einem Ausführungsbeispiel einer Anschluss-Vorrichtung und einem Ausführungsbeispiel einer Lateral-Kopplungsvorrichtung;
■ Figur 6 eine vergrößerte Perspektiv-Darstellung eines Ausschnitts der Darstellung der Figur 4 mit einem weiteren Ausführungsbeispiel einer Anschluss-Vorrichtung und einem weiteren Ausführungsbeispiel einer Lateral-Kopplungsvorrichtung;
■ Figur 7 eine vergrößerte Darstellung der in der Figur 6 dargestellten Ausführungsbeispielen der Anschluss-Vorrichtung und der Lateral-Kopplungsvorrichtung in einer weiteren Perspektiv-Ansicht;
■ Fig. 8 einen aerodynamischen Körper als Teil einer Ausführungsform des erfindungsgemäßen Tragflügels schräg von unten gesehen mit einer weiteren Ausführungsform der Lateral-Kopplungsvorrichtung und der Anschluss-Vorrichtung;
■ Fig. 9 eine vergrößerte Perspektiv-Darstellung eines Ausschnitts der Darstellung der Figur 8 mit dem Ausführungsbeispiel einer Anschluss-Vorrichtung und dem Ausführungsbeispiel einer Lateral-Kopplungsvorrichtung;
■ Fig. 10 einen aerodynamischen Körper als Teil einer Ausführungsform des erfindungsgemäßen Tragflügels schräg von unten gesehen mit einer weiteren Ausführungsform der Lateral-Kopplungsvorrichtung und der Anschluss-Vorrichtung;
■ Fig. 11 eine Hinterkanten-Klappe als aerodynamischer Körper mit der Lateral-Kopplungsvorrichtung nach der Figur 10 von vorne oder in Strömungsrichtung gesehen;
■ Fig. 12 die Hinterkanten-Klappe mit der Lateral-Kopplungsvorrichtung nach der Figur 9 von oben gesehen.

In Figur 1 ist ein Tragflügel F eines modernes Verkehrs- oder Transportflugzeug gezeigt, welches an seinem Hauptflügel 1 sowohl an der Flügelvorderkante wie auch an der Flügelhinterkante mit aerodynamischen Körpern oder Strömungsklappen z.B. in Form von Vorflügeln 2a bis 2f und Hinterkanten-Klappen 3a und 3b und mit weiteren Stellklappen versehen ist. Z.B. bildet der Hauptflügel mit zumindest einer der aerodynamischen Körper oder Strömungsklappen ein Hochauftriebssystem zur Erhöhung des Auftriebs insbesondere bei Start und Landung.

Die Erfindung wird im Folgenden insbesondere an Hand einer Hinterkantenklappe als Ausführungsform eines aerodynamischen Körpers, die in den Figuren 2 bis 11 mit dem Bezugszeichen B versehen ist, beschrieben und kann in analoger Weise auf andere aerodynamische Körper, wie Vorflügel, Spoiler, Querruder oder allgemein Stellklappen verwendet werden:

Der erfindungsgemäße Tragflügel eines Flugzeugs und z.B. das erfindungsgemäße Hochauftriebssystem weist einen Hauptflügel 1 und zumindest eine mittels einer Antriebs-Vorrichtung A gegenüber diesem quer zu dessen Spannweiten-Richtung S verstellbaren aerodynamischen Körper B auf. Der Tragflügel weist zumindest zwei voneinander in Spannweitenrichtung des Hauptflügels beabstandete Anschluss-Vorrichtungen 11, 12 zur Führung des aerodynamischen Körpers B beim Verstellen gegenüber dem Hauptflügel 1 auf. Jede Anschluss-Vorrichtung 11, 12 lagert den aerodynamischen Körper B mittels einer Gelenk-Verbindung 13 bzw. 14 oder einer ersten Gelenk-Verbindung derart lagert, die zumindest einen Rotations-Freiheitsgrad des aerodynamischen Körpers gegenüber dem Hauptflügel mit einer Drehachse 13a bzw. 14a zulässt, die eine Richtungskomponente quer zur Spannweiten-Richtung S der Strömungsklappe hat. In der Figur 4 ist eine Ausführungsform der Anschluss-Vorrichtung von der Seite gesehen mit einer schematischen Darstellung einer Drehachse 13a gezeigt.

Zumindest zwei oder jede der an dem aerodynamischen Körper 2a, 2b, 2c; 3a, 3b, 3c; B angeordnete Anschluss-Vorrichtungen 11, 12 zur Verstellung desselben weist jeweils insbesondere auf: jeweils ein an dem Hauptflügel 1 befestigtes Trägerteil T, einen Aufhängeträger 21 bzw. 22, die erste Gelenk-Verbindung 13, 14, mit der der Aufhängeträger 21 bzw. 22 mit dem Trägerteil T unter Ausbildung zumindest eines Rotationsfreiheitsgrads gekoppelt ist, und eine zweite Gelenk-Verbindung 23 bzw. 24 mit zumindest einem Rotations-Freiheitsgrad zur Kopplung des aerodynamischen Körpers B mit dem Aufhängeträger 21 bzw. 22. Der zumindest eine Rotations-Freiheitsgrad der zweiten Gelenk-Verbindung 23 bzw. 24 ist durch eine Drehachse 23a bzw. 24a mit einer Richtungskomponente quer zur Spannweiten-Richtung der Strömungsklappe hat. Somit verläuft die Richtung der Drehachse 23a bzw. 24a der zweiten Gelenk-Verbindung 23 bzw. 24 quer oder winklig, also nicht parallel und vorzugsweise in einem Winkel von über 45 Grad zur Richtung der Drehachse 23a bzw. 24a der zweiten Gelenk-Verbindung 23 bzw. 24.

Der Aufhängeträger kann z.B. aus einem Hebel, einer Platte (z.B. Figur 4) oder zwei winklig zueinander angeordnete Hebel (Figur 6) gebildet sein.

In einem weiteren Ausführungsbeispiel kann die zweite Gelenk-Verbindung 23, 24, mit der der Aufhängeträger an das Trägerteil gekoppelt ist, drei Rotationsfreiheitsgrade zulassen. In diesem Fall kann die zweite Gelenk-Verbindung insbesondere als Kugelgelenk ausgebildet sein. Alternativ kann die zweite Gelenk-Verbindung 23, 24 aus mehreren Gelenken zusammengesetzt sein, die insgesamt drei Rotationsfreiheitsgrade zur Verfügung stellen.

Die erste Gelenk-Verbindung 13, 14 zur Kopplung des Aufhängeträgers 21, 22 mit dem aerodynamischen Körper B kann, wie es in den Figuren 5 bis 8 dargestellt ist, zwei in der Tiefenrichtung der Strömungsklappe beabstandete Gelenke 13a, 13b bzw. 14a, 14b aufweisen, die Drehgelenke mit parallel zueinander verlaufenden und insbesondere identischen Drehachsen 13a bzw. 14a haben. Die Drehachsen 13a bzw. 14a verlaufen insbesondere quer zur Spannweitenrichtung S des aerodynamischen Körpers. In einem weiteren Ausführungsbeispiel kann die zweite Gelenk-Anordnung zur Kopplung des Aufhängeträgers mit dem aerodynamischen Körper B zwei in der Tiefenrichtung der Strömungsklappe beabstandete Kugelgelenke aufweisen.

Die Antriebs-Vorrichtung für die Verstellung des aerodynamischen Körpers B kann mit einem Torsionswellenstrang 7 mit einer Anzahl von Torsionswellen 7a, 7b, 7c, 7d, 7e, die durch einen zentralen Antriebsmotor (nicht gezeigt) angetrieben sind, und einem an dem aerodynamischen Körper B angeordneten Stellantrieb realisiert sein, wie dies an Hand des Ausführungsbeispiels der Figur 10 exemplarisch für eine HinterkantenKlappe gezeigt ist. Der Stellantrieb zur Verstellung des aerodynamischen Körpers B kann an den Aufhängeträger 21 der Anschluss-Vorrichtung 11 oder 12, wie dies in der Figur 3 dargestellt ist, oder direkt an den aerodynamischen Körper B, wie dies in der Figur 3 und der Figur 10 dargestellt ist, angekoppelt sein.

Die Antriebs-Vorrichtung A mit dem Stellantrieb 8 und der Kopplung desselben mit dem aerodynamischen Körper B kann wie in der Figur 2 dargestellt realisiert sein. Dabei weist Antriebs-Vorrichtung A auf: einen Dreh-Aktuator oder Rotationsantrieb 8a, auch "Rotary Actuator" genannt, mit einem drehenden Stell-Hebel 8b, einer an dem Stell-Hebel 8b angekoppelten Antriebs-Stange 8c, die mit einer Gelenk-Verbindung 8d an einen am aerodynamischen Körper B (Figur 2) oder an einem der Aufhängungs-Träger T vorgesehenen Gelenk-Anschluss A1 angekoppelt ist. Eine derartige Realisierung der Antriebs-Vorrichtung A mit einem Rotationsantrieb 8a ist auch bei dem Ausführungsbeispiel der Figuren 10 bis 12 gezeigt. Der Stellantrieb 8 kann auch als Spindelantrieb 9a ausgeführt sein. Dieser kann mit einer Torsionsstange 9b realisiert sein, der z.B. über in der Figur 10 gezeigte Torsionsstangen 7a bis 7e und ein entsprechendes Kopplungsgetriebe (nicht gezeigt) angetrieben wird. Der Spindelantrieb 9a ist über eine Antriebs-Stange 9c mittels einer Gelenk-Verbindung 9d an einen am aerodynamischen Körper B oder an einem der Aufhängungs-Träger 21 (Figur 3) vorgesehenen Gelenk-Anschluss A1 angekoppelt und setzt die rotatorische Eingangsbewegung in eine lineare Ausgangsbewegung um, die von der Anschluss-Vorrichtung wiederum in eine Relativ-Bewegung und z.B. Schwenk-Bewegung des aerodynamischen Körpers B gegenüber dem Hauptflügel 1 umgesetzt wird.

Die Gelenk-Verbindungen 8d, 9d können insbesondere ein Gelenk mit drei Rotations-Freiheitsgraden aufweisen. Eine solche Gelenk-Verbindung kann als Kugel-Gelenk oder als zusammengesetztes Gelenk, wie z.B. einer Kombination aus einem Kardangelenk und einem Torsionsgelenk, gebildet sein. Die Antriebs-Vorrichtung A kann auch andere Stellantriebe und Ankopplung desselben an den aerodynamischen Körper B aufweisen und z.B. auch aus Kombinationen der beschriebenen Ausführungsformen realisiert sein. Der Stellantrieb kann am Hauptflügel und insbesondere am Trägerteil T oder am aerodynamischen Körper oder dem Aufhängeträger 21, 22 gelagert sein. Generell kann der die mechanische Leistung erzeugende Antrieb auch durch den Stellantrieb aufgrund einer entsprechenden Energiezufuhr von einem Hydraulik- oder Elektrik-System des Flugzeugs realisiert sein. In diesen Fällen kann der Stellantrieb durch einen elektrischen Aktuator oder einen hydraulischen Aktuator realisiert sein.

Der erfindungsgemäße Tragflügel weist ferner eine Lateral-Kopplungsvorrichtung L zum Halten und Führen des zumindest einen aerodynamischen Körpers B gegenüber dem Hauptflügel 1 in dessen Spannweiten-Richtung S bei dessen Verstellung auf mit: einer Kopplungs-Verbindung L3, einem ersten Kopplungs-Anschluss L1 zur Kopplung eines ersten Endes der Kopplungs-Verbindung mit dem Hauptflügel 1 oder einem mit diesem verbundenen Flugzeug-Bauteil oder einem weiteren aerodynamischen Körper und einem zweiten Kopplungs-Anschluss L2 zur Kopplung eines zweiten Endes der Kopplungs-Verbindung mit dem aerodynamischen Körper B. Die Lateral-Kopplungsvorrichtung ist derart gestaltet, dass diese insgesamt fünf Freiheitsgrade aufweist sowie eine Verstell-Bewegung des aerodynamischen Körpers B gegenüber dem Hauptflügel 1 quer zur Spannweitenrichtung S desselben zulässt. Die fünf Freiheitsgrade können fünf Rotations-Freiheitsgrade (Figuren 4 bis 7 und 10 bis 12) sein oder können z.B. aus vier Rotations-Freiheitsgraden und einem translatorischen Freiheitsgrad zusammengesetzt sein (Figuren 8 und 9). Die fünf Rotations-Freiheitsgrade können generell aus rotatorischen und/oder translatorischen Freiheitsgraden insbesondere mittels Koppelverbindungen einschließlich Gelenken und Führungsvorrichtungen zusammen gesetzt sein und sind derart definiert, dass der aerodynamische Körper B gegenüber dem Hauptflügel 1 in der Spannweiten-Richtung S des Hauptflügels bzw. des aerodynamischen Körpers B gehalten oder geführt wird, wenn der aerodynamische Körper B gegenüber dem Hauptflügel 1 verstellt wird. Generell kann mit der Lateral-Kopplungsvorrichtung L auch mehr als fünf Freiheitsgrade bei der Kopplung zwischen aerodynamischen Körper B und dem Hauptflügel 1 und zur Verfügung gestellt werden, solange eine Lateral-Führung, d.h. eine Führung in Spannweiten-Richtung des aerodynamischen Körpers bzw. des Hauptflügels für den aerodynamischen Körper bei dessen Verstellung gegeben ist und eine vorbestimmte Verstellung und ein vorbestimmter Verstellbereich zugelassen ist. Die Lateral-Kopplungsvorrichtung L mit Kopplungs-Verbindung L3, erstem Kopplungs-Anschluss L1, zweitem Kopplungs-Anschluss L2 ist hinsichtlich der durch diese verfügbare Kinematik so gestaltet, dass die Lateral-Kopplungsvorrichtung L insgesamt fünf Freiheitsgrade aufweist, die so definiert sind, dass die Lateral-Kopplungsvorrichtung L eine Verstell-Bewegung des aerodynamischen Körpers gegenüber dem Hauptflügel 1 quer zur Spannweitenrichtung S desselben zulässt. Dies ist erfindungsgemäß in verschiedenen Ausführungsformen realisierbar, wobei die beschriebenen Ausführungsformen nur als Beispiele zu verstehen sind:

Der erste Kopplungs-Anschluss L1 kann mit dem aerodynamischen Körper oder mit der Anschluss-Vorrichtung 11, 12 verbunden sein und kann somit ein am aerodynamischen Körper oder ein an der Anschluss-Vorrichtung 11, 12 angebrachtes Anschlussteil 40 aufweisen.

Die Lateral-Kopplungsvorrichtung L kann derart ausgebildet sein, dass der erste Kopplungs-Anschluss L1 drei Rotations-Freiheitsgrade zulässt, so dass zwei Freiheitsgrade in der Kopplungs-Verbindung L3 und dem zweitem Kopplungs-Anschluss L2 realisiert sind. Dabei kann insbesondere der erste Kopplungs-Anschluss L1 als Kugel-Gelenk ausgebildet sein, wie dies in dem Ausführungsbeispiel gemäß Figuren 10 bis 12 dargestellt ist. Bei diesem Ausführungsbeispiel kann der zweite Kopplungs-Anschluss L2 durch z.B. ein Kardangelenk oder ein Schub-Gelenk mit einem Drehgelenk realisiert sein.

Alternativ kann der zweite Kopplungs-Anschluss L2 drei Rotations-Freiheitsgrade aufweisen und insbesondere als Kugel-Gelenk ausgebildet sein. Bei diesem Ausführungsbeispiel kann der erste Kopplungs-Anschluss L2 durch z.B. ein Kardangelenk oder ein Schub-Gelenk mit einem Drehgelenk realisiert sein.

Eines der zwei Kopplungs-Anschlüsse L1, L2 der Lateral-Kopplungsvorrichtung L kann als Kardangelenk mit Realisierung eines zusätzlichen Freiheitsgrades realisiert sein. Dieser zusätzliche Freiheitsgrad kann durch eine in seiner Längsrichtung verstellbare Verbindungsstange realisiert sein. Auch kann dieser zusätzliche Freiheitsgrad durch ein Schub-Gelenk oder eine Führungsvorrichtung realisiert sein, die einen translatorischen Freiheitsgrad zur Verfügung stellt. Die verstellbare Verbindungsstange, das Schub-Gelenk oder die Führungsvorrichtung können insbesondere auch mit einem Stellantrieb zur Betätigung der Lateral-Kopplungsvorrichtung L gekoppelt sein, um den aerodynamischen Körper B zu verstellen. Alternativ können die Verbindungsstange, das Schub-Gelenk oder die Führungsvorrichtung auch mittels einer Vorspannvorrichtung in einen Zustand vorgespannt sein, der einem Verstellzustand des aerodynamischen Körpers B entspricht, z.B. dessen eingefahrenen oder ausgefahrenen Zustand.

Nach einem weiteren, in den Figuren 4 bis 7 dargestellten Ausführungsbeispiel der Lateral-Kopplungsvorrichtung L kann vorgesehen sein, dass die Verbindungs-Kopplung L3 aus zwei miteinander gelenkig verbundenen Kopplungs-Hebeln 41, 42 gebildet ist, wobei entweder der erste Kopplungs-Anschluss L1 oder der zweite Kopplungs-Anschluss L2 oder ein die beiden Kopplungs-Hebel miteinander verbindendes Gelenk 43 drei Rotations-Freiheitsgrade zulässt. In diesem Fall teilen sich die zumindest zwei weitere Freiheitsgrade auf die weiteren Kopplungen auf.

Nach einer Weiterführung dieses Ausführungsbeispiels ist die Verbindungs-Kopplung aus zwei miteinander gelenkig verbundenen Kopplungs-Hebeln gebildet mit:
■ einem ersten Kopplungs-Hebel 41, der über eine Gelenk-Verbindung 41 a mit dem Hauptflügel mit einer quer zur Tiefenrichtung des Hauptflügels 1 verlaufenden Drehachse gekoppelt ist, und
■ einem zweiten Kopplungs-Hebel 42, der über eine Gelenk-Verbindung 43 mit einer quer zur Flügel-Tiefenrichtung T des Hauptflügels 1 verlaufenden Drehachse mit dem ersten Kopplungs-Hebel 41 gekoppelt ist, und der mit dem aerodynamischen Körper B oder dem Aufhängeträger 21, 22 über eine Gelenk-Verbindung 42a, die drei Rotationsfreiheitsgrade zulässt, gekoppelt ist.

Dabei ist die Gelenk-Verbindung 42a mit dem aerodynamischen Körper oder dem Aufhängeträger 21, 22 oder die Gelenk-Verbindung 41 a zwischen dem ersten Kopplungs-Hebel 41 und dem Hauptflügel 1 so gestaltet, dass diese drei Rotationsfreiheitsgrade zulässt. Die Gelenk-Verbindung 43) zur Kopplung des ersten Kopplungs-Hebels 41 mit dem aerodynamischen Körper B oder dem Aufhängeträger 21, 22 kann insbesondere ein Kugelgelenk aufweisen. Dabei kann weiterhin die Gelenk-Verbindung 42a zur Kopplung des ersten Kopplungs-Hebels 41 mit dem Hauptflügel 1 und die Gelenk-Verbindung 43 zur Kopplung des ersten 41 und des zweiten 42 Kopplungs-Hebels jeweils ein Drehgelenk mit einem Rotations-Freiheitsgrad aufweisen.

Nach einem weiteren Ausführungsbeispiel der Lateral-Kopplungsvorrichtung L kann vorgesehen sein, dass die Verbindungs-Kopplung L3 aufweist:
■ einen Kopplungs-Hebel 51, der über einen ersten Kopplungs-Anschluss L1 mit dem aerodynamischen Körper B dem Aufhängeträger 21, 22 mit einer quer zur Tiefenrichtung T des Hauptflügels verlaufenden Drehachse gekoppelt ist, und
■ einem Anschlussteil 52, das über eine Gelenk-Verbindung 53 mit einer quer zur Flügel-Tiefenrichtung T des Hauptflügels 1 verlaufenden Drehachse mit dem Kopplungs-Hebel 51 gekoppelt ist, und der mittels eines Schlittens 54 und einer Führungsvorrichtung 55 linear-bewegbar in einer quer zur Spannweiten-Richtung verlaufenden Richtung am Hauptflügel geführt ist.

In dem in den Figuren 8 und 9 dargestellten Ausführungsbeispiel ist die am Anschlussteil 52 angebrachte Führungsvorrichtung 55 als Schlitten ausgebildet, die mit einer Führungsbahn, die am Hauptflügel angeordnet ist, zusammenwirkt. In einer Variante kann umgekehrt der Schlitten am Hauptflügel 1 und die Führungsbahn an dem Anschlussteil 52 ausgebildet oder angebracht sein. Beide Varianten kann die Lateral-Kopplungsvorrichtung L auch zwischen dem Aufhängeträger 21, 22 und dem Hauptflügel 1 koppeln, wobei dann die Führungsvorrichtung 55 in Form des Schlittens oder der Führungsbahn am Aufhängeträger anstatt am aerodynamischen Körper vorgesehen oder angebracht ist.

Bei dem Ausführungsbeispiel der Figuren 4 und 5 weist der erste Kopplungs-Anschluss L1 eine Gelenk-Verbindung 51a mit drei Freiheitsgraden und die Gelenk-Verbindung 53 ein Drehgelenk 53 mit einem Freiheitsgrad auf. Alternativ kann der erste Kopplungs-Anschluss L1 eine Gelenk-Verbindung 51a mit einem Freiheitsgraden und die Gelenk-Verbindung 53 ein Drehgelenk 53 mit drei Freiheitsgraden aufweisen.

Die Ausführungsbeispiele der Figur 8 und9 können auch derart realisiert sein, dass der Kopplungshebel 51 am Hauptflügel 1 mit einem Gelenk 51a angekoppelt ist und das Anschlussteil 52 mit der Führungsvorrichtung 55 am aerodynamischen Körper B oder dem Aufhängeträger 21 angekoppelt sind.

In den Figuren 10 bis 12 ist eine weitere Ausführungsform der Lateral-Kopplungsvorrichtung L dargestellt. Dabei ist die Kopplungs-Verbindung L3 aus einem Verbindungs-Hebel 61 gebildet und sind die erste Kopplungs-Verbindung L1 und die zweite Kopplungs-Verbindung L1 voneinander in einem Abstand in Spannweiten-Richtung des Hauptflügels gelegen sind, so dass die Lateral-Kopplungsvorrichtung L eine Verstell-Bewegung des aerodynamischen Körpers gegenüber dem Hauptflügel 1 quer zur Spannweitenrichtung S desselben zulässt. Der Hauptflügel-seitige Teil der ersten Kopplungs-Verbindung L1 kann eine Mehrzahl von an dem Hauptflügel befestigten Befestigungsstreben 65 aufweisen, die winklig zueinander und zumindest teilweise mit Richtungskomponenten in Spannweitenrichtung S des Hauptflügels verlaufen.

Bei dem Ausführungsbeispiel der Figuren 10 bis 12 ist die erste Kopplungs-Verbindung L1 mit einer Gelenk-Verbindung 61 a und die erste Kopplungs-Verbindung L2 mit einer Gelenk-Verbindung 61 b realisiert. Bei einem Schwenken des aerodynamischen Körpers B um die Drehachse D wird der Verbindungs-Hebel 61 in den Gelenk-Verbindungen 61 a, 61 b gedreht und der aerodynamische Körper B bei seiner Verstellung durch Verbindungs-Hebel 61 in der Spannweiten-Richtung S gehalten.

Erfindungsgemäß kann die erste Kopplungs-Verbindung L2 oder zweite Kopplungs-Verbindung L2 mit drei Rotations-Freiheitsgraden realisiert sein.

Dabei kann z.B. die erste Kopplungs-Verbindung L1 als Gelenk-Verbindung 61a mit drei Rotations-Freiheitsgraden und insbesondere als Kugelgelenk realisiert sein. In diesem Fall kann die zweite Kopplungs-Verbindung L2 als Gelenk-Verbindung 61 b mit zwei Rotations-Freiheitsgraden realisiert sein. Umgekehrt kann die zweite Kopplungs-Verbindung L2 als Gelenk-Verbindung 61 b mit drei Rotations-Freiheitsgraden und insbesondere als Kugelgelenk und die erste Kopplungs-Verbindung L1 als Gelenk-Verbindung 61a mit zwei Rotations-Freiheitsgraden realisiert sein. Die Gelenk-Verbindung mit zwei Freiheitsgraden kann generell z.B. als Kardangelenk realisiert sein.

In einer Weiterführung dieser Ausführungsbeispiele kann der Verbindungs-Hebel 61 in seiner Länge veränderbar gestaltet sein. Dabei kann vorgesehen sein, dass der Verbindungs-Hebel 61 in eine einer eingefahrenen Stellung des aerodynamischen Körpers entsprechenden Länge vorgespannt ist. Alternativ oder zusätzlich kann auch vorgesehen sein, dass der Verbindungs-Hebel 61 als durch einen Stellantrieb antreibbare Antriebsstange zur Betätigung der Anschluss-Vorrichtung 21, 22 ausgebildet ist. Der Stellantrieb kann in der Antriebsstange 61 integriert sein, um diese in ihrer Länge zu verändern. Der Stellantrieb kann auch mit dem Verbindungs-Hebel 61 bzw. der Antriebsstange gekoppelt sein, um den Verbindungs-Hebel 61 zu verschwenken, und dazu am aerodynamischen Körper B, dem Aufhängeträger 21, 22 oder dem Hauptflügel 1 angebracht sein. In diesen Fällen kann der Stellantrieb z.B. als Dreh-Aktuator ausgeführt sein und dabei, je nach dessen Zuordnung, den ersten oder zweiten Kopplungsanschluss oder das erste oder zweite Drehgelenk 61 a, 61 b aufweisen.

Nach einer Weiterführung der Erfindung ist ein Tragflügel der beschriebenen Art vorgesehen, an dem zwei oder mehr als zwei aerodynamische Körper in Flügeltiefen-Richtung gesehen hintereinander angeordnet und miteinander über eine Lateral-Kopplungsvorrichtung L nach einer der erfindungsgemäßen und in analoger Weise verwendeten Ausführungsformen gekoppelt sind.

Dabei ist einer der beiden Kopplungs-Anschlüsse der Lateral-Kopplungsvorrichtung L, z.B. der erste Kopplungs-Anschluss L1, an einem ersten aerodynamischen Körper angekoppelt und der andere der beiden Kopplungs-Anschlüsse der Lateral-Kopplungsvorrichtung L, z.B. der zweite Kopplungs-Anschluss L2, an einem zweiten, in Spannweiten-Richtung S neben dem ersten aerodynamischen Körper gelegenen zweiten aerodynamischen Körper angekoppelt.

Die Lateral-Kopplungsvorrichtung L kann nach einem der beschriebenen Ausführungsbeispiele mit dem Unterschied gestaltet sein, das die erste oder die zweite Kopplungs-Anschluss L1, L2 nicht am Hauptflügel 1, sondern an einem zweiten, in Spannweiten-Richtung S neben einem ersten aerodynamischen Körper gelegenen zweiten aerodynamischen Körper angekoppelt ist.

Die Ankopplung eines neben einem ersten aerodynamischen Körper gelegenen zweiten aerodynamischen Körpers mittels einer Lateral-Kopplungsvorrichtung L kann vorgesehen sein mit oder ohne einer Ankopplung eines oder beider der aerodynamischen Körper an den Hauptflügel mittels einer Lateral-Kopplungsvorrichtung L nach einer der beschriebenen Ausführungsformen.

## Patentansprüche

1. Tragflügel eines Flugzeugs mit einem Hauptflügel (1) und zumindest einem mittels einer Antriebs-Vorrichtung gegenüber diesem quer zu dessen Spannweiten-Richtung verstellbaren aerodynamischen Körper (2a, 2b, 2c, 2e, 2f; 3a, 3b, B), aufweisend:
■ zumindest zwei voneinander in Spannweitenrichtung des Hauptflügels beabstandete Anschluss-Vorrichtungen (11, 12) zur Führung des aerodynamischen Körpers beim Verstellen gegenüber dem Hauptflügel, die den aerodynamischen Körper mittels einer Gelenk-Verbindung (13, 14) derart lagern, dass diese zumindest einen Rotations-Freiheitsgrad des aerodynamischen Körpers (2a, 2b, 2c; 3a, 3b, 3c; B) gegenüber dem Hauptflügel mit einer Drehachse (13a, 14a) zulässt, die eine Richtungskomponente quer zur Spannweiten-Richtung (S) des aerodynamischen Körpers hat;
**dadurch gekennzeichnet, dass**
■ eine Lateral-Kopplungsvorrichtung (L) zum Halten und Führen des zumindest einen aerodynamischen Körpers gegenüber dem Hauptflügel in dessen Spannweiten-Richtung (S) bei dessen Verstellung, aufweisend: eine Kopplungs-Verbindung (L3), einen ersten Kopplungs-Anschluss (L1) zur Kopplung eines ersten Endes der Kopplungs-Verbindung mit dem Hauptflügel oder einem mit diesem verbundenen Flugzeug-Bauteil oder einem weiteren aerodynamischen Körper und einen zweiten Kopplungs-Anschluss (L2) zur Kopplung eines zweiten Endes der Kopplungs-Verbindung mit dem aerodynamischen Körper (B), wobei die Lateral-Kopplungsvorrichtung (L) bezüglich der Kopplungsfunktion insgesamt zumindest fünf Freiheitsgrade aufweist und eine Verstell-Bewegung des aerodynamischen Körpers gegenüber dem Hauptflügel (1) quer zur Spannweitenrichtung (S) des Hauptflügels (1) zulässt.

2. Tragflügel nach dem Anspruch 1, **dadurch gekennzeichnet, dass** zumindest zwei Anschluss-Vorrichtungen (11, 12) zur Verstellung des aerodynamischen Körpers (2a, 2b, 2c; 3a, 3b, 3c; B) jeweils aufweisen: jeweils ein an dem Hauptflügel (1) befestigtes Trägerteil (T), einen Aufhängeträger, erste Gelenk-Verbindung (13, 14) mit zumindest einem Rotations-Freiheitsgrad zur Kopplung des aerodynamischen Körpers (2a, 2b, 2c; 3a, 3b, 3c; B) mit dem Aufhängeträger und eine zweite Gelenk-Verbindung (23, 24) aufweist, mit der der Aufhängeträger mit dem Trägerteil unter Ausbildung zumindest eines Rotationsfreiheitsgrads gekoppelt ist.

3. Tragflügel nach dem Anspruch 2, **dadurch gekennzeichnet, dass** die zweite Gelenk-Verbindung (23, 24), mit der der Aufhängeträger (21, 22) an das Trägerteil (20) gekoppelt ist, drei Rotationsfreiheitsgrade zulässt und insbesondere durch ein Kugelgelenk ausgebildet ist.

4. Tragflügel nach einem der Ansprüche 2 bis 3, **dadurch gekennzeichnet, dass** die erste Gelenk-Verbindung (13, 14) zur Kopplung des Aufhängeträgers mit dem aerodynamischen Körper zwei Gelenke aufweist, die Drehgelenke mit parallel zueinander verlaufenden Drehachsen und in der Tiefenrichtung der Strömungsklappe beabstandet sindund dass die erste Gelenk-Verbindung zur Kopplung des Aufhängeträgers mit dem aerodynamischen Körper (2a, 2b, 2c; 3a, 3b, 3c; B) zwei in der Tiefenrichtung des aerodynamischen Körpers beabstandete Kugelgelenke aufweist.

5. Tragflügel nach einem der voranstehenden Ansprüche 1 bis 4, **dadurch gekennzeichnet, dass** die Antriebs-Vorrichtung (A) zur Verstellung des aerodynamischen Körpers (2a, 2b, 2c; 3a, 3b, 3c; B) den Aufhängeträger (21, 22) der Anschluss-Vorrichtung (12, 13) betätigt, wobei insbesondere zumindest eine der Anschluss-Vorrichtungen (11, 12) mit der Antriebs-Vorrichtung (A) mittels einer Antriebsstange (8c, 9c) gekoppelt ist, die über eine Gelenk-Verbindung (8d, 9d) mit drei Rotations-Freiheitsgraden mit dem Aufhängungs-Träger (21, 22) der Anschluss-Vorrichtung (11, 12) gekoppelt ist.

6. Tragflügel nach einem der Ansprüche 1 bis 5, **dadurch gekennzeichnet, dass** die Antriebs-Vorrichtung (A) mittels einer Antriebsstange (8c, 9c) mit dem aerodynamischen Körper (2a, 2b, 2c; 3a, 3b, 3c; B) gekoppelt ist, wobei die Antriebsstange (8c, 9c) über eine Gelenk-Verbindung (8d, 9d) mit drei Rotations-Freiheitsgraden mit dem aerodynamischen Körper (2a, 2b, 2c; 3a, 3b, 3c; B) gekoppelt ist.

7. Tragflügel nach einem der voranstehenden Ansprüche 1 bis 6, **dadurch gekennzeichnet, dass** der erste Kopplungs-Anschluss (L1) ein an der Anschluss-Vorrichtung (11, 12) angebrachtes Anschlussteil zur Kopplung eines ersten Endes der Kopplungs-Verbindung mit dem Hauptflügel oder einem mit diesem verbundenen Flugzeug-Bauteil oder einem weiteren aerodynamischen Körper aufweist, das drei Rotations-Freiheitsgrade zulässt und insbesondere als Kugel-Gelenk ausgebildet ist.

8. Tragflügel nach einem der voranstehenden Ansprüche, **dadurch gekennzeichnet, dass** der zweite Kopplungs-Anschluss drei Rotations-Freiheitsgrade zulässt und insbesondere als Kugel-Gelenk ausgebildet ist.

9. Tragflügel nach einem der Ansprüche 1 bis 7, **dadurch gekennzeichnet, dass** die Verbindungs-Kopplung (L3) aus zwei miteinander gelenkig verbundenen Kopplungs-Hebeln (41, 42) gebildet ist, wobei entweder der erste Kopplungs-Anschluss (L1) oder der zweite Kopplungs-Anschluss (L2) oder ein die beiden Kopplungs-Hebel miteinander verbindendes Gelenk drei Rotations-Freiheitsgrade zulässt.

10. Tragflügel nach einem der voranstehenden Ansprüche 1 bis 8, **dadurch gekennzeichnet, dass** die Verbindungs-Kopplung aus zwei miteinander gelenkig verbundenen Kopplungs-Hebeln gebildet ist mit:
■ einem ersten Kopplungs-Hebel (41), der über eine Gelenk-Verbindung (41a) mit dem Hauptflügel mit einer quer zur Tiefenrichtung des Hauptflügels verlaufenden Drehachse gekoppelt ist, und
■ einem zweiten Kopplungs-Hebel (42), der über eine Gelenk-Verbindung (43) mit einer quer zur Flügel-Tiefenrichtung (T) des Hauptflügels (1) verlaufenden Drehachse mit dem ersten Kopplungs-Hebel (41) gekoppelt ist, und der mit dem aerodynamischen Körper (B; 2a, 2b, 2c; 3a, 3b, 3c) oder dem Aufhängeträger (21, 22) über eine Gelenk-Verbindung (42a), die drei Rotationsfreiheitsgrade zulässt, gekoppelt ist,
wobei die Gelenk-Verbindung (42a) mit dem aerodynamischen Körper oder dem Aufhängeträger (21, 22) oder die Gelenk-Verbindung (41a) zwischen dem ersten Kopplungs-Hebel (41) und dem Hauptflügel (1) drei Rotationsfreiheitsgrade zulässt und insbesondere als Kugelgelenk ausgebildet ist.

11. Tragflügel nach einem der voranstehenden Ansprüche 1 bis 8, **dadurch gekennzeichnet, dass** die Verbindungs-Kopplung aufweist:
■ einen Kopplungs-Hebel (51), der über einen ersten Kopplungs-Anschluss (L1) mit dem aerodynamischen Körper (B; 2a, 2b, 2c; 3a, 3b, 3c) oder dem Aufhängeträger (21, 22) mit einer quer zur Tiefenrichtung (T) des Hauptflügels verlaufenden Drehachse gekoppelt ist, und
■ einem Anschlussteil (52), das über eine Gelenk-Verbindung (53) mit einer quer zur Flügel-Tiefenrichtung (T) des Hauptflügels (1) verlaufenden Drehachse mit dem Kopplungs-Hebel (51) gekoppelt ist, und der mittels eines Schlittens (54) und einer Führungsvorrichtung (55) linear-bewegbar in einer quer zur Spannweiten-Richtung verlaufenden Richtung am Hauptflügel geführt ist,
wobei insbesondere das erste Kopplungs-Anschluss (L1) eine Gelenk-Verbindung (51a) mit drei Freiheitsgraden und die Gelenk-Verbindung (53) ein Drehgelenk (53) mit einem Freiheitsgrad aufweist oder
wobei insbesondere erste Kopplungs-Anschluss (L1) eine Gelenk-Verbindung (51a) mit einem Freiheitsgraden und die Gelenk-Verbindung (53) ein Drehgelenk (53) mit drei Freiheitsgraden aufweist.

12. Tragflügel nach einem der voranstehenden Ansprüche 1 bis 8, **dadurch gekennzeichnet, dass** die Kopplungs-Verbindung (L3) der Lateral-Kopplungsvorrichtung (L) einen Verbindungs-Hebel (61) aufweist, wobei die erste Kopplungs-Verbindung (L1) und die zweite Kopplungs-Verbindung (L1) voneinander in einem Abstand in Spannweiten-Richtung des Hauptflügels gelegen sind, so dass die Lateral-Kopplungsvorrichtung (L) eine Verstell-Bewegung des aerodynamischen Körpers gegenüber dem Hauptflügel (1) quer zur Spannweitenrichtung (S) desselben zulässt,
wobei insbesondere die zweite Kopplungs-Verbindung (L2) drei Rotations-Freiheitsgrade verfügbar macht und/oder
wobei die erste Kopplungs-Verbindung (L1) ein Kardangelenk aufweist.

13. Tragflügel nach dem Anspruch 12, **dadurch gekennzeichnet, dass** das Verbindungsstück in seiner Länge veränderbar ist.

14. Tragflügel nach einem der voranstehenden Ansprüche 12 oder 13, **dadurch gekennzeichnet, dass** der Hauptflügel-seitige Teil der ersten Kopplungs-Verbindung (L1) eine Mehrzahl von an dem Hauptflügel befestigten Befestigungsstreben aufweist, die winklig zueinander und mit Richtungskomponenten in Spannweitenrichtung des Hauptflügels verlaufen.

15. Tragflügel nach dem Anspruch 13, **dadurch gekennzeichnet, dass** der Verbindungs-Hebel (61) in eine einer eingefahrenen Stellung des aerodynamischen Körpers entsprechenden Länge vorgespannt ist.

16. Tragflügel nach einem der voranstehenden Ansprüche 12 bis 15, **dadurch gekennzeichnet, dass** der Verbindungs-Hebel (61) eine Antriebsstange zur Betätigung der Anschluss-Vorrichtung (21, 22) ist, so dass diese die Bewegung des aerodynamischen Körpers (2a, 2b, 2c; 3a, 3b, 3c; B) in Spannweitenrichtung beim Fahren der Landeklappe steuert.

17. Tragflügel eines Flugzeugs mit einem Hauptflügel (1) und zumindest zwei mittels einer Antriebs-Vorrichtung gegenüber dem Hauptflügel (1) quer zu dessen Spannweiten-Richtung (S) verstellbaren aerodynamischen Körper (2a, 2b, 2c, 2e, 2f; 3a, 3b, B), die in der Spannweiten-Richtung (S) des Hauptflügels (1) gesehen nebeneinander angeordnet sind, aufweisend:
■ zumindest zwei voneinander in Spannweitenrichtung des Hauptflügels beabstandete Anschluss-Vorrichtungen (11, 12) zur Führung des aerodynamischen Körpers beim Verstellen gegenüber dem Hauptflügel, die den aerodynamischen Körper mittels einer Gelenk-Verbindung (13, 14) derart lagern, dass diese zumindest einen Rotations-Freiheitsgrad des aerodynamischen Körpers (2a, 2b, 2c; 3a, 3b, 3c; B) gegenüber dem Hauptflügel mit einer Drehachse (13a, 14a) zulässt, die eine Richtungskomponente quer zur Spannweiten-Richtung (S) des aerodynamischen Körpers hat;
**dadurch gekennzeichnet, dass**
■ eine Lateral-Kopplungsvorrichtung (L) zum Halten und Führen der zumindest zwei aerodynamischen Körper gegenüber dem Hauptflügel in dessen Spannweiten-Richtung (S) bei dessen Verstellung, wobei mittels der Lateral-Kopplungsvorrichtung (L) die beiden aerodynamischen Körper miteinander gekoppelt sind und wobei ein erster Kopplungs-Anschluss (L1) an dem einen der aerodynamischen Körper angeordnet ist und ein zweiter, über die Kopplungs-Verbindung (L3) mit dem ersten Kopplungs-Anschluss (L1) in Verbindung stehender Kopplungs-Anschluss (L2) an dem weiteren der aerodynamischen Körper angeordnet ist,
wobei die aerodynamischen Körper Hinterkanten-Klappe sind.

18. Flugzeug mit einem Rumpf, einem Tragflügel mit einem Hauptflügel (1) und zumindest einem mittels einer Antriebs-Vorrichtung gegenüber diesem quer zu dessen Spannweiten-Richtung (S) verstellbaren aerodynamischen Körper (2a, 2b, 2c, 2e, 2f; 3a, 3b, B), aufweisend:
■ zumindest zwei voneinander in Spannweitenrichtung (S) des Hauptflügels beabstandete Anschluss-Vorrichtungen (11, 12) zur Führung des aerodynamischen Körpers beim Verstellen gegenüber dem Hauptflügel, die den aerodynamischen Körper mittels einer Gelenk-Verbindung (13, 14) derart lagern, dass diese zumindest einen Rotations-Freiheitsgrad des aerodynamischen Körpers (2a, 2b, 2c; 3a, 3b, 3c; B) gegenüber dem Hauptflügel mit einer Drehachse (13a, 14a) zulässt, die eine Richtungskomponente quer zur Spannweiten-Richtung (S) des aerodynamischen Körpers hat;
**dadurch gekennzeichnet, dass**
■ eine Lateral-Kopplungsvorrichtung (L) zum Halten und Führen des zumindest einen aerodynamischen Körpers in dessen Spannweiten-Richtung (S) gegenüber einem Flugzeug-Bauteil des Rumpfes bei dessen Verstellung, wobei mittels der Lateral-Kopplungsvorrichtung (L) der aerodynamische Körper (2a, 2b, 2c; 3a, 3b, 3c; B) an das Flugzeug-Bauteil angekoppelt ist, wobei ein erster Kopplungs-Anschluss (L1) an dem Flugzeug-Bauteil angeordnet ist und ein zweiter in der Spannweiten-Richtung (S) des Hauptflügels (1) gesehen neben dem ersten Kopplungs-Anschluss angeordneter zweiter Kopplungs-Anschluss, der über die Kopplungs-Verbindung (L3) mit dem ersten Kopplungs-Anschluss (L1) in Verbindung steht, an dem aerodynamischen Körper angeordnet ist,
wobei der aerodynamische Körper eine Hinterkanten-Klappe ist.

## Claims

1. Wing of an aircraft with a main wing (1) and at least one aerodynamic body (2a, 2b, 2c, 2e, 2f; 3a, 3b, B) which can be displaced with respect thereto, transversely to the spanwise direction thereof, by means of a drive device, having:
■ at least two connecting devices (11, 12) for guiding the aerodynamic body during displacement with respect to the main wing, spaced apart from one another in the spanwise direction of the main wing, which bear the aerodynamic body by means of an articulated connection (13, 14) such that this connection allows at least one rotational degree of freedom of the aerodynamic body (2a, 2b, 2c; 3a, 3b, 3c; B) with respect to the main wing with an axis of rotation (13a, 14a) which has a direction component transverse to the spanwise direction (S) of the aerodynamic body;
**characterized by**
■ a lateral coupling device (L) for holding and guiding the at least one aerodynamic body with respect to the main wing in the spanwise direction (S) thereof during the displacement of said at least one aerodynamic body, having: a coupling connection (L3), a first coupling attachment (L1) for coupling a first end of the coupling connection with the main wing or an aircraft component connected thereto or a further aerodynamic body, and a second coupling attachment (L2) for coupling a second end of the coupling connection with the aerodynamic body (B), wherein the lateral coupling device (L) has at least five degrees of freedom overall with respect to the coupling function and allows a displacement movement of the aerodynamic body with respect to the main wing (1) transversely to the spanwise direction (S) of the main wing (1).

2. Wing according to claim 1, **characterized in that** at least two connecting devices (11, 12) for displacing the aerodynamic body (2a, 2b, 2c; 3a, 3b, 3c; B) have in each case: in each case a carrier part (T) attached to the main wing (1), a suspension member, a first articulated connection (13, 14) with at least one rotational degree of freedom for coupling the aerodynamic body (2a, 2b, 2c; 3a, 3b, 3c; B) to the suspension member, and a second articulated connection (23, 24) by means of which the suspension member is coupled to the carrier part, at least one rotational degree of freedom being formed.

3. Wing according to claim 2, **characterized in that** the second articulated connection (23, 24), by means of which the suspension member (21, 22) is coupled to the carrier part (20), allows three rotational degrees of freedom and is formed in particular by a ball-and-socket joint.

4. Wing according to either of claims 2 and 3, **characterized in that** the first articulated connection (13, 14) for coupling the suspension member to the aerodynamic body has two joints which are hinges having axes of rotation parallel to each other and which are spaced apart in the chordwise direction of the flow flap, and **in that** the first articulated connection for coupling the suspension member to the aerodynamic body (2a, 2b, 2c; 3a, 3b, 3c; B) has two ball-and-socket joints spaced apart in the chordwise direction of the aerodynamic body.

5. Wing according to any of the preceding claims 1 to 4, **characterized in that** the drive device (A) for displacing the aerodynamic body (2a, 2b, 2c; 3a, 3b, 3c; B) actuates the suspension member (21, 22) of the connecting device (11, 12), wherein in particular at least one of the connecting devices (11, 12) is coupled to the drive device (A) by means of a drive rod (8c, 9c) which is coupled to the suspension member (21, 22) of the connecting device (11, 12) by means of an articulated connection (8d, 9d) with three rotational degrees of freedom.

6. Wing according to any of claims 1 to 5, **characterized in that** the drive device (A) is coupled to the aerodynamic body (2a, 2b, 2c; 3a, 3b, 3c; B) by means of a drive rod (8c, 9c), wherein the drive rod (8c, 9c) is coupled to the aerodynamic body (2a, 2b, 2c; 3a, 3b, 3c; B) by means of an articulated connection (8d, 9d) with three rotational degrees of freedom.

7. Wing according to any of the preceding claims 1 to 6, **characterized in that** the first coupling attachment (L1) has an attachment part, attached to the attachment device (11, 12), for coupling a first end of the coupling connection to the main wing or an aircraft component connected thereto or a further aerodynamic body, which attachment part allows three rotational degrees of freedom and in particular is formed as a ball-and-socket joint.

8. Wing according to any of the preceding claims, **characterized in that** the second coupling attachment allows three rotational degrees of freedom and in particular is formed as a ball-and-socket joint.

9. Wing according to any of claims 1 to 7, **characterized in that** the connection coupling (L3) consists of two coupling levers (41, 42) interconnected in an articulated manner, wherein either the first coupling attachment (L1) or the second coupling attachment (L2) or a joint interconnecting the two coupling levers allows three rotational degrees of freedom.

10. Wing according to any of the preceding claims 1 to 8, **characterized in that** the connection coupling consists of two coupling levers interconnected in an articulated manner, with:
■ a first coupling lever (41) which is coupled to the main wing by means of an articulated connection (41a) having an axis of rotation running transversely to the chordwise direction of the main wing, and
■ a second coupling lever (42) which is coupled to the first coupling lever (41) by means of an articulated connection (43) having an axis of rotation running transversely to the wing chordwise direction (T) of the main wing (1), and which is coupled to the aerodynamic body (B; 2a, 2b, 2c; 3a, 3b, 3c) or to the suspension member (21, 22) by means of an articulated connection (42a) which allows three rotational degrees of freedom,
wherein the articulated connection (42a) with the aerodynamic body or the suspension member (21, 22) or the articulated connection (41a) between the first coupling lever (41) and the main wing (1) allows three rotational degrees of freedom and is designed in particular as a ball-and-socket joint.

11. Wing according to any of the preceding claims 1 to 8, **characterized in that** the connection coupling has:
■ a coupling lever (51) which is coupled, by means of a first coupling attachment (L1), to the aerodynamic body (B; 2a, 2b, 2c; 3a, 3b, 3c) or to the suspension member (21, 22) with an axis of rotation running transversely to the chordwise direction (T) of the main wing, and
■ an attachment part (52) which is coupled, by means of an articulated connection (53) having an axis of rotation running transversely to the wing chordwise direction (T) of the main wing (1), to the coupling lever (51), and which is guided on the main wing by means of a carriage (54) and a guiding device (55) in a linearly movable manner in a direction running transversely to the spanwise direction,
wherein in particular the first coupling attachment (L1) has an articulated connection (51a) having three degrees of freedom and the articulated connection (53) has a hinge (53) having one degree of freedom, or
wherein in particular the first coupling attachment (L1) has an articulated connection (51a) having one degree of freedom and the articulated connection (53) has a hinge (53) having three degrees of freedom.

12. Wing according to any of the preceding claims 1 to 8, **characterized in that** the coupling connection (L3) of the lateral coupling device (L) has a connecting lever (61), wherein the first coupling attachment (L1) and the second coupling attachment (L2) are disposed spaced apart from each other in the spanwise direction of the main wing such that the lateral coupling device (L) allows a displacement movement of the aerodynamic body with respect to the main wing (1) transversely to the spanwise direction (S) thereof,
wherein in particular the second coupling attachment (L2) makes three rotational degrees of freedom available and/or
wherein the first coupling attachment (L1) has a cardan joint.

13. Wing according to claim 12, **characterized in that** the connection piece is adjustable in length.

14. Wing according to either of the preceding claims 12 and 13, **characterized in that** the main-wing-side part of the first coupling attachment (L1) has a plurality of attachment struts, attached to the main wing, which run at an angle to one another and with direction components in the spanwise direction of the main wing.

15. Wing according to claim 13, **characterized in that** the connecting lever (61) is biased to a length corresponding to a retracted position of the aerodynamic body.

16. Wing according to any of the preceding claims 12 to 15, **characterized in that** the connecting lever (61) is a drive rod for actuating the connecting device (21, 22), so as to control the movement of the aerodynamic body (2a, 2b, 2c; 3a, 3b, 3c; B) in the spanwise direction during the movement of the landing flap.

17. Wing of an aircraft with a main wing (1) and at least two aerodynamic bodies (2a, 2b, 2c, 2e, 2f; 3a, 3b, B) which are arranged next to each other as seen in the spanwise direction (S) of the main wing (1) and which can be displaced with respect to the main wing (1), transversely to the spanwise direction (S) thereof, by means of a drive device, having:
■ at least two connecting devices (11, 12) for guiding the aerodynamic component during displacement with respect to the main wing, spaced apart from one another in the spanwise direction of the main wing, which bear the aerodynamic body by means of an articulated connection (13, 14) such that this connection allows at least one rotational degree of freedom of the aerodynamic body (2a, 2b, 2c; 3a, 3b, 3c; B) with respect to the main wing with an axis of rotation (13a, 14a) which has a direction component transverse to the spanwise direction (S) of the aerodynamic body;
**characterized by**
■ a lateral coupling device (L) for holding and guiding the at least two aerodynamic bodies with respect to the main wing in the spanwise direction (S) thereof during the displacement of said at least two aerodynamic bodies, wherein by means of the lateral coupling device (L) the two aerodynamic bodies are coupled to one another and wherein a first coupling attachment (L1) is arranged on one of the aerodynamic bodies and a second coupling attachment (L2), which is in connection with the first coupling attachment (L1) by means of the coupling connection (L3), is arranged on the further aerodynamic body,
wherein the aerodynamic bodies are trailing edge flaps.

18. Aircraft having a fuselage and having a wing with a main wing (1) and at least one aerodynamic body (2a, 2b, 2c, 2e, 2f; 3a, 3b, B) which can be displaced with respect thereto, transversely to the spanwise direction (S) thereof, by means of a drive device, having:
■ at least two connecting devices (11, 12) for guiding the aerodynamic component during displacement with respect to the main wing, spaced apart from one another in the spanwise direction (S) of the main wing, which bear the aerodynamic body by means of an articulated connection (13, 14) such that this connection allows at least one rotational degree of freedom of the aerodynamic body (2a, 2b, 2c; 3a, 3b, 3c; B) with respect to the main wing with an axis of rotation (13a, 14a) which has a direction component transverse to the spanwise direction (S) of the aerodynamic body;
**characterized by**
■ a lateral coupling device (L) for holding and guiding the at least one aerodynamic body in the spanwise direction (S) thereof, with respect to an aircraft component of the fuselage, during the displacement of said at least one aerodynamic body, wherein the aerodynamic body (2a, 2b, 2c; 3a, 3b, 3c; B) is coupled to the aircraft component by means of the lateral coupling device (L), wherein a first coupling attachment (L1) is arranged on the aircraft component and a second coupling attachment, which is arranged next to the first coupling attachment as seen in the spanwise direction (S) of the main wing (1) and which is connected to the first coupling attachment (L1) by means of the coupling connection (L3), is arranged on the aerodynamic body,
wherein the aerodynamic body is a trailing edge flap.

## Revendications

1. Aile d'un avion, comprenant une aile principale (1) et au moins un corps aérodynamique (2a, 2b, 2c, 2e, 2f; 3a, 3b, B) pouvant être déplacé par rapport à celle-ci, transversalement au sens de l'envergure de celle-ci, au moyen d'un dispositif d'entraînement, présentant :
- au moins deux dispositifs de raccord (11, 12), espacés l'un de l'autre dans le sens de l'envergure de l'aile principale et destinés à guider le corps aérodynamique lors du déplacement par rapport à l'aile principale, qui supportent le corps aérodynamique au moyen d'une liaison articulée (13, 14), de telle sorte que celle-ci autorise au moins un degré de liberté de rotation du corps aérodynamique (2a, 2b, 2c; 3a, 3b, 3c; B) par rapport à l'aile principale, avec un axe de rotation (13a, 14a) qui présente une composante directionnelle transversale au sens de l'envergure (S) du corps aérodynamique;
**caractérisée en ce que**
- un dispositif de couplage latéral (L) pour tenir et guider le corps aérodynamique, au nombre d'au moins un, lors de son déplacement, par rapport à l'aile principale, dans le sens de l'envergure (S) de celle-ci, présentant : une liaison de couplage (L3), un premier raccord de couplage (L1) pour coupler une première extrémité de la liaison de couplage à l'aile principale ou à un élément de l'avion, relié à celle-ci, ou à un autre corps aérodynamique, et un deuxième raccord de couplage (L2) pour coupler une deuxième extrémité de la liaison de couplage au corps aérodynamique (B), le dispositif de couplage latéral (L) présentant au total au moins cinq degrés de liberté par rapport à la fonction de couplage et autorisant un mouvement de déplacement du corps aérodynamique par rapport à l'aile principale (1), transversalement au sens de l'envergure (S) de l'aile principale (1).

2. Aile selon la revendication 1, **caractérisée en ce qu'**au moins deux dispositifs de raccord (11, 12) pour le déplacement du corps aérodynamique (2a, 2b, 2c; 3a, 3b, 3c; B) présentent respectivement : un élément support (T) fixé à l'aile principale (1), un support de suspension, une première liaison articulée (13, 14) avec au moins un degré de liberté de rotation pour le couplage du corps aérodynamique (2a, 2b, 2c; 3a, 3b, 3c; B) au support de suspension, et une deuxième liaison articulée (23, 24) par laquelle le support de suspension est couplé à l'élément support en créant au moins un degré de liberté de rotation.

3. Aile selon la revendication 2, **caractérisée en ce que** la deuxième liaison articulée (23, 24), par laquelle le support de suspension (21, 22) est couplé à l'élément support (20), autorise trois degrés de liberté de rotation et est réalisée notamment sous la forme d'une articulation sphérique.

4. Aile selon l'une des revendications 2 à 3, **caractérisée en ce que**, pour le couplage du support de suspension au corps aérodynamique, la première liaison articulée (13, 14) présente deux articulations qui sont des articulations tournantes, avec des axes de rotation parallèles l'un à l'autre, et sont espacées dans le sens de la profondeur du volet, et **en ce que**, pour le couplage du support de suspension au corps aérodynamique (2a, 2b, 2c; 3a, 3b, 3c; B), la première liaison articulée présente deux articulations sphériques espacées dans le sens de la profondeur du corps aérodynamique.

5. Aile selon l'une des revendications précédentes 1 à 4, **caractérisée en ce que**, pour le déplacement du corps aérodynamique (2a, 2b, 2c; 3a, 3b, 3c; B), le dispositif d'entraînement (A) actionne le support de suspension (21, 22) du dispositif de raccord (11, 12), sachant que notamment au moins l'un des dispositifs de raccord (11, 12) est couplé au dispositif d'entraînement (A) au moyen d'une barre d'entraînement (8c, 9c) qui est couplée au support de suspension (21, 22) du dispositif de raccord (11, 12) par l'intermédiaire d'une liaison articulée (8d, 9d) à trois degrés de liberté de rotation.

6. Aile selon l'une des revendications 1 à 5, **caractérisée en ce que** le dispositif d'entraînement (A) est couplé au corps aérodynamique (2a, 2b, 2c; 3a, 3b, 3c; B) au moyen d'une barre d'entraînement (8c, 9c), la barre d'entraînement (8c, 9c) étant couplée au corps aérodynamique (2a, 2b, 2c; 3a, 3b, 3c; B) par l'intermédiaire d'une liaison articulée (8d, 9d) à trois degrés de liberté de rotation.

7. Aile selon l'une des revendications précédentes 1 à 6, **caractérisée en ce que** le premier raccord de couplage (L1) présente un élément de raccord, monté sur le dispositif de raccord (11, 12) et destiné au couplage d'une première extrémité de la liaison de couplage à l'aile principale ou un élément de l'avion relié à celle-ci ou un autre corps aérodynamique, qui autorise trois degrés de liberté de rotation et est réalisé notamment sous la forme d'une articulation sphérique.

8. Aile selon l'une des revendications précédentes, **caractérisée en ce que** le deuxième raccord de couplage autorise trois degrés de liberté de rotation et est réalisé notamment sous la forme d'une articulation sphérique.

9. Aile selon l'une des revendications 1 à 7, **caractérisée en ce que** le couplage de liaison (L3) est constitué de deux leviers de couplage (41, 42) reliés de façon articulée l'un à l'autre, sachant que soit le premier raccord de couplage (L1), soit le deuxième raccord de couplage (L2), soit une articulation reliant les deux leviers de couplage autorise trois degrés de liberté de rotation.

10. Aile selon l'une des revendications précédentes 1 à 8, **caractérisée en ce que** le couplage de liaison est constitué de deux leviers de couplage reliés de façon articulée l'un à l'autre, comprenant :
- un premier levier de couplage (41) qui est couplé à l'aile principale par une liaison articulée (41a) avec un axe de rotation s'étendant transversalement au sens de la profondeur de l'aile principale, et
- un deuxième levier de couplage (42) qui est couplé au premier levier de couplage (41), par l'intermédiaire d'une liaison articulée (43) avec un axe de rotation s'étendant transversalement au sens de profondeur d'aile (T) de l'aile principale (1), et qui est couplé au corps aérodynamique (B; 2a, 2b, 2c; 3a, 3b, 3c) ou au support de suspension (21, 22) par l'intermédiaire d'une liaison articulée (42a) qui autorise trois degrés de liberté de rotation,
la liaison articulée (42a) avec le corps aérodynamique ou avec le support de suspension (21, 22) ou la liaison articulée (41a) entre le premier levier de couplage (41) et l'aile principale (1) autorisant trois degrés de liberté de rotation et étant réalisée notamment sous la forme d'une articulation sphérique.

11. Aile selon l'une des revendications précédentes 1 à 8, **caractérisée en ce que** le couplage de liaison présente :
- un levier de couplage (51) qui est couplé par l'intermédiaire d'un premier raccord de couplage (L1) au corps aérodynamique (B; 2a, 2b, 2c; 3a, 3b, 3c) ou au support de suspension (21, 22) avec un axe de rotation s'étendant transversalement au sens de profondeur (T) de l'aile principale, et
- un élément de raccord (52) qui est couplé au levier de couplage (51), par l'intermédiaire d'une liaison articulée (53) avec un axe de rotation s'étendant transversalement au sens de profondeur d'aile (T) de l'aile principale (1), et qui est guidé sur l'aile principale au moyen d'un chariot (54) et d'un dispositif de guidage (55), avec possibilité de déplacement linéaire dans une direction s'étendant transversalement au sens de l'envergure.
sachant que notamment le premier raccord de couplage (L1) présente une liaison articulée (51a) à trois degrés de liberté, et la liaison articulée (53) présente une articulation tournante (53) à un degré de rotation, ou
sachant que notamment le premier raccord de couplage (L1) présente une liaison articulée (51a) à un degré de liberté et la liaison articulée (53) présente une articulation tournante (53) à trois degrés de liberté.

12. Aile selon l'une des revendications précédentes 1 à 8, **caractérisée en ce que** la liaison de couplage (L3) du dispositif de couplage latéral (L) présente un levier de liaison (61), la première liaison de couplage (L1) et la deuxième liaison de couplage (L1) se situant à distance l'une de l'autre dans le sens de l'envergure de l'aile principale, de sorte que le dispositif de couplage latéral (L) autorise un mouvement de déplacement du corps aérodynamique par rapport à l'aile principale (1), transversalement au sens de l'envergure (S) de celle-ci,
sachant que notamment la deuxième liaison de couplage (L2) rend disponibles trois degrés de liberté de rotation, et/ou
sachant que la première liaison de couplage (L1) présente un joint de Cardan.

13. Aile selon la revendication 12, **caractérisée en ce que** la longueur de la pièce de liaison peut être modifiée.

14. Aile selon l'une des revendications précédentes 12 ou 13, **caractérisée en ce que** la partie de la première liaison de couplage (L1) située côté aile principale présente une pluralité de jambes de fixation qui sont fixées à l'aile principale et s'étendent en définissant un angle les unes avec les autres et avec des composantes directionnelles dans le sens de l'envergure de l'aile principale.

15. Aile selon la revendication 13, **caractérisée en ce que** le levier de liaison (61) est précontraint dans une longueur correspondant à une position rentrée du corps aérodynamique.

16. Aile selon l'une des revendications précédentes 12 à 15, **caractérisée en ce que** le levier de liaison (61) est une barre d'entraînement pour l'actionnement du dispositif de raccord (21, 22), de sorte que celui-ci commande le mouvement du corps aérodynamique (2a, 2b, 2c; 3a, 3b, 3c; B) dans le sens de l'envergure lors du déplacement du volet d'atterrissage.

17. Aile d'un avion, comprenant une aile principale (1) et au moins deux corps aérodynamiques (2a, 2b, 2c, 2e, 2f; 3a, 3b, B) qui peuvent être déplacés au moyen d'un dispositif d'entraînement par rapport à l'aile principale (1), transversalement au sens de l'envergure (S) de celle-ci, et qui sont disposés l'un à côté de l'autre, vu dans le sens de l'envergure (S) de l'aile principale (1), présentant :
- au moins deux dispositifs de raccord (11, 12), espacés l'un de l'autre dans le sens de l'envergure de l'aile principale et destinés à guider le corps aérodynamique lors du déplacement par rapport à l'aile principale, qui supportent le corps aérodynamique au moyen d'une liaison articulée (13, 14), de telle sorte que celle-ci autorise au moins un degré de liberté de rotation du corps aérodynamique (2a, 2b, 2c; 3a, 3b, 3c; B) par rapport à l'aile principale, avec un axe de rotation (13a, 14a) qui présente une composante directionnelle transversale au sens de l'envergure (S) du corps aérodynamique;
**caractérisée en ce que**
- un dispositif de couplage latéral (L) pour tenir et guider les corps aérodynamiques, au nombre d'au moins deux, par rapport à l'aile principale, dans le sens de l'envergure (S) de celle-ci, lors de son déplacement, sachant que les deux corps aérodynamiques sont couplés l'un à l'autre au moyen du dispositif de couplage latéral (L), et sachant qu'un premier raccord de couplage (L1) est disposé sur l'un des corps aérodynamiques, et un deuxième raccord de couplage (L2), relié au premier raccord de couplage (L1) par la liaison de couplage (L3), est disposé sur l'autre corps aérodynamique,
les corps aérodynamiques étant des volets de bord de fuite.

18. Avion comprenant un fuselage, une aile avec une aile principale (1) et au moins un corps aérodynamique (2a, 2b, 2c, 2e, 2f ; 3a, 3b; B) pouvant être déplacé par rapport à celle-ci, transversalement au sens de l'envergure (S) de celle-ci, au moyen d'un dispositif d'entraînement, présentant :
- au moins deux dispositifs de raccord (11, 12), espacés l'un de l'autre dans le sens de l'envergure (S) de l'aile principale et destinés à guider le corps aérodynamique lors du déplacement par rapport à l'aile principale, qui supportent le corps aérodynamique au moyen d'une liaison articulée (13, 14), de telle sorte que celle-ci autorise au moins un degré de liberté de rotation du corps aérodynamique (2a, 2b, 2c; 3a, 3b, 3c; B) par rapport à l'aile principale, avec un axe de rotation (13a, 14a) qui présente une composante directionnelle transversale au sens de l'envergure (S) du corps aérodynamique;
**caractérisé en ce que**
- un dispositif de couplage latéral (L) pour tenir et guider le corps aérodynamique, au nombre d'au moins un, dans le sens de son envergure (S), par rapport à un élément d'avion du fuselage, lors de son déplacement, sachant que le corps aérodynamique (2a, 2b, 2c; 3a, 3b, 3c; B) est couplé à l'élément d'avion au moyen du dispositif de couplage latéral (L), qu'un premier raccord de couplage (L1) est disposé sur l'élément d'avion, et un deuxième raccord de couplage, qui est disposé à côté du premier raccord de couplage, vu dans le sens de l'envergure (S) de l'aile principale (1), et qui est relié au premier raccord de couplage (L1) par la liaison de couplage (L3), est disposé sur le corps aérodynamique, le corps aérodynamique étant un volet de bord de fuite.
